# EUROPEAN PATENT APPLICATION

(11) **EP 4 610 830 A1**
(43) Date of publication of application: **03.09.2025**
(21) Application number: 25159657.3
(22) Date of filing: 24.02.2025
(51) Int. Cl.: G06F 11/10, G06F 9/445, G06F 11/14

(54) **INFORMATION PROCESSING DEVICE AND INFORMATION PROCESSING METHOD**

(30) Priority: 29.02.2024 JP 2024030513
(71) Applicant: Yokogawa Electric Corporation, Tokyo 180-8750 (JP)
(72) Inventor: CHOSEI, Naoya, Musashino-shi, Tokyo, 180-8750, (JP); NAKAGAKI, Kenichi, Musashino-shi, Tokyo, 180-8750, (JP)
(74) Representative: Winter, Brandl - Partnerschaft mbB

(57) **Abstract**

An information processing device (1) has a control unit (2) configured to write a program read from an external memory (3), in an internal memory (12) and execute the program. The information processing device includes a writing control unit (11), a reading control unit (13) and a transferring unit (14). The writing control unit is configured to calculate a parity value of an instruction or a set of data of the program, and write the instruction or the set of data and the parity value in the internal memory. The reading control unit is configured to determine, based on the parity value, presence or absence of an error in the instruction or the set of data. The transferring unit is configured to transfer, when the error has occurred, the instruction or the set of data read again from the external memory, to the control unit and the writing control unit.

## Description

### BACKGROUND OF THE INVENTION

### 1. Field of the Invention

The present invention relates to an information processing device and an information processing method.

### 2. Description of the Related Art

A conventional information processing device includes an integrated circuit (IC) and includes an external read only memory (external ROM) that is used to store information such as computer programs to be executed in the IC. Usually, as compared to accessing the computer programs stored in the external ROM, the IC can make high-speed access to the computer programs stored in the internal random access memory (internal RAM) thereof, and hence can perform high-speed processing of those computer programs.

Generally, in a RAM in which computer programs are stored, if bit inversion such as inversion of a single bit of a stored computer program occurs due to some reason, it is believed that the computer program is not executed in a normal manner. Particularly, in a system required to perform stable operations, such as in the control system of a plant; abnormal operations attributed to bit inversion have a significant impact.

As the cause for bit inversion, for example, it is possible to think of some hardware that is persistently malfunctioning or to think of a soft error that is temporary by nature. A hardware error is caused by physical factors, and represents physical malfunctioning attributed to malfunctioning due to aging or overvoltage. Hence, a hardware error cannot be repaired by resetting the power supply. On the other hand, a soft error is caused by an external factor such as the neutron rays, which are included in radiation, or the electromagnetic noise. Thus, when a soft error occurs, since the hardware is in good health, the soft error can be repaired by restoring the correct values by means of resetting the power supply.

In recent years, from the perspective of achieving performance upgrade and energy conservation in devices, there is a demand for miniaturization and power saving of semiconductors. However, such miniaturization and power saving leads to a decrease in the resistance characteristic of the semiconductors with respect to the external influences such as radiation and electromagnetic noise. That results in an increase in the occurrence rate of soft errors.

Japanese Patent Application Laid-open No. 2007-18414

Regarding the conventional information processing devices, it is a fact that there is a demand for an information processing device in which, even if a soft error occurs in a computer program, it becomes possible to resolve the soft error and to continue with the normal operation of the computer program.

As an aspect, it is an objective to provide an information processing device that is capable of continuing with the normal operation of a computer program.

### SUMMARY OF THE INVENTION

According to an aspect of an embodiment, an information processing device (1) includes a control unit (2) configured to write a computer program, which is read from an external memory unit (3), in an internal memory unit (12) and execute the computer program which is read from the internal memory unit. The information processing device (1) includes a writing control unit (11), a reading control unit (13) and a transferring unit (14). The writing control unit (11) is configured to calculate a parity value of an instruction or a set of data of the computer program read from the external memory unit, and write the instruction or the set of data and the parity value in the internal memory unit. The reading control unit (13) is configured to determine, based on the parity value of the instruction or the set of data of the computer program read from the internal memory unit, presence or absence of an error in the instruction or the set of data of the computer program. The transferring unit (14) is configured to transfer, when the error has occurred, the instruction or the set of data of the computer program, which is read again from the external memory unit, to the control unit (2) and the writing control unit (11).

According to an aspect of an embodiment, an information processing method is implemented by an information processing device (1). The information processing device includes a control unit (2) that writes a computer program, which is read from an external memory unit (3), in an internal memory unit (12) and executes the computer program which is read from the internal memory unit. The information processing method includes writing that includes calculating a parity value of an instruction or a set of data of the computer program read from the external memory unit, and writing the instruction or the set of data and the parity value in the internal memory unit. The information processing method includes determining, based on the parity value of the instruction or the set of data of the computer program read from the internal memory unit, presence or absence of an error in the instruction or the set of data of the computer program. The information processing method includes transferring, when the error has occurred, the instruction or the set of data of the computer program, which is read again from the external memory unit, to the control unit (2).

### BRIEF DESCRIPTION OF THE DRAWINGS

FIG. 1 is a block diagram illustrating an example of an information processing device according to an embodiment;
FIG. 2 is a block diagram illustrating an example of a memory control unit;
FIG. 3 is a flowchart for explaining an example of the operations performed in a writing operation in the information processing device;
FIG. 4 is a flowchart for explaining an example of the operations performed in an execution operation in the information processing device; and
FIG. 5 is a block diagram illustrating an example of an information processing device according to a comparison example.

### DETAILED DESCRIPTION OF THE PREFERRED EMBODIMENTS

### Comparison example

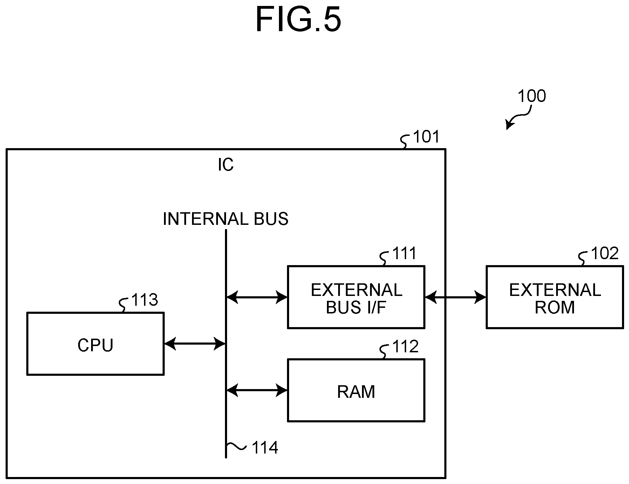

FIG. 5 is a block diagram illustrating an example of an information processing device 100 according to a comparison example. The information processing device 100 illustrated in FIG. 5 includes an integrated circuit (IC) 101 and an external read only memory (external ROM) 102. The external ROM 102 is an external memory unit used to store information such as the computer programs to be executed in the IC 101. The IC 101 is a control unit that controls the information processing device 100 in entirety. The IC 101 reads the computer programs stored in the external ROM 102, and executes them as functions.

The IC 101 includes an external bus interface (I/F) 111, a random access memory (RAM) 112, a central processing unit (CPU) 113, and an internal bus 114. The external bus I/F 111 represents an input-output interface for establishing connection with the external ROM 102. The RAM 112 is an internal memory unit used to temporarily store the computer programs that have been read from the external ROM 102. The CPU 113 controls the IC 101 in entirety. The CPU 113 writes, in the RAM 112, the computer programs that have been read from the external ROM 102 via the external bus I/F 111. The CPU 113 reads instructions (sets of data) of the computer programs from the RAM 112 and executes those instructions (sets of data). Herein, for explanatory convenience, an instruction (set of data) of a computer program is assumed to imply either an instruction or a set of data of the computer program. The internal bus 114 represents a bus line that establishes connection among the external bus I/F 111, the RAM 112, and the CPU 113, thereby enabling communication of information such as data or computer programs among the external bus I/F 111, the RAM 112, and the CPU 113.

For example, at the time of switching on the power supply to the information processing device 100, the CPU 113 reads computer programs stored in the external ROM 102, transfers those computer programs to the RAM 112, and writes them in the RAM 112. Then, for example, at the time of running a computer program, the CPU 113 reads the instructions (sets of data) of that computer program written in the RAM 112, and executes the read instructions (sets of data).

In the conventional information processing device 100, usually, as compared to the computer programs stored in the external ROM 102, the computer programs stored in the internal RAM 112 can be accessed with high-speed, thereby enabling high-speed processing of those computer programs.

As a measure to deal with the soft errors in the information processing device 100, for example, it is possible to think of installing, in the information processing device 100, an error detection/correction function based on the error correction code (ECC).

However, regarding the ECC, more errors can be detected/corrected if the length of the error correction code is increased. However, that not only leads to an increase in the volume of information required for calculating and detecting the code, but there also occurs an increase in the volume and the band (overhead) unnecessarily spent on the error correction code at the time of recording and transfer. As a result, in an information processing device in which the ECC is installed, it becomes necessary to provide a memory for storing the error correction code and to provide a control circuit for detecting and correcting the errors. Particularly, in order to increase the memory capacity for storing the error correction code, it becomes necessary to increase the memory capacity of the RAM. That leads to an increase in the mounting area and an increase in the circuit size of the information processing device.

Moreover, ECC-based correction does not include correction of the memory content and includes correction of only the output data. Thus, in a control system of a plant that cannot be rebooted for a long period of time, errors get accumulated and, when a plurality of errors (bit inversions) occurs in a computer program that is read, it is also possible to think that correction is no more performed.

In that regard, there is a demand for an information processing device in which, even when a soft error occurs in a computer program, it is possible to resolve the soft error without installing the ECC and to continue with the normal operation of the computer program.

An exemplary embodiment of an information processing device according to the application concerned is described below in detail with reference to the accompanying drawings. However, the technology disclosed herein is not limited by the embodiment described below. Moreover, embodiments can be appropriately modified without causing any contradictions.

### Embodiment

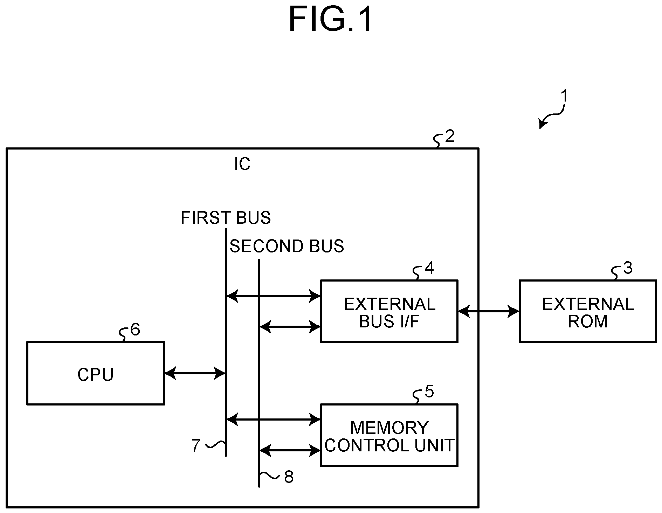

FIG. 1 is a block diagram illustrating an example of an information processing device 1 according to the present embodiment. The information processing device 1 illustrated in FIG. 1 includes an integrated circuit (IC) 2 and an external read only memory (external ROM) 3. For example, the information processing device 1 is a distributed control system (DCS), or a safety instrumented system (SIS), or some other factory automation (FA) device, or a field device such as a pressure transmitter, a temperature transmitter, a multi-variable transmitter, or a flowmeter. The IC 2 is, for example, an integrated circuit installed inside a DCS, an SIS, an FA device, or a field device. The IC 2 controls the information processing device 1 in entirety. The external ROM 3 is an external memory unit used to store the computer programs to be executed in the IC 2.

The IC 2 includes an external bus I/F 4, a memory control unit 5, a central processing unit (CPU) 6, a first bus 7, and a second bus 8. The external bus I/F 4 is an input-output interface that establishes connection with the external ROM 3. The memory control unit 5 has a random access memory (RAM) 12 built-in as the internal memory unit, and controls the RAM 12. The CPU 6 represents a control unit that controls the IC 2 in entirety.

The first bus 7 is, for example, an internal bus that connects the CPU 6 and the external bus I/F 4 to each other and connects the CPU 6 and the memory control unit 5 to each other, and that enables communication of a variety of information such as computer programs and data. The second bus 8 is, for example, an internal bus that connects the external bus I/F 4 and the memory control unit 5 to each other and that enables communication of a variety of information such as computer programs and data.

### Configuration of memory control unit

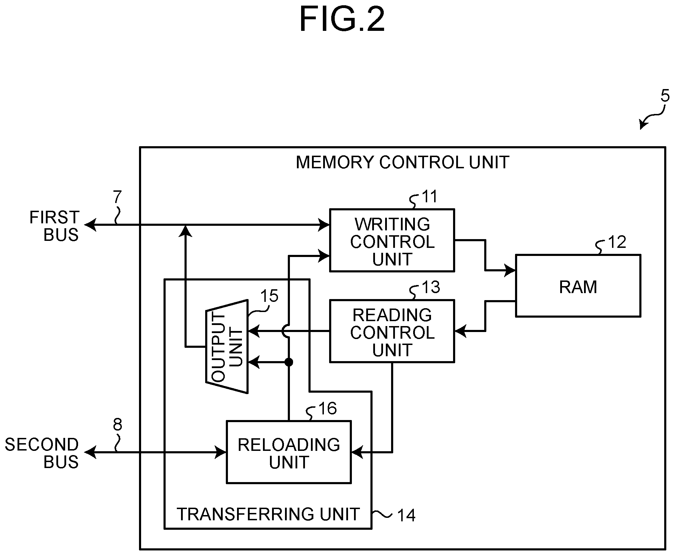

FIG. 2 is a block diagram illustrating an example of the memory control unit 5. The memory control unit 5 illustrated in FIG. 2 includes a writing control unit 11, a RAM 12, a reading control unit 13, and a transferring unit 14. The writing control unit 11 performs writing control of the RAM 12. The writing control unit 11 sequentially writes the instructions or the sets of data of a computer program read from the external ROM 3. At the time of sequentially writing the instructions or the sets of data of a computer program read from the external ROM 3, the writing control unit 11 calculates a first-type parity value of each instruction (set of data) of the computer program, and sequentially writes the calculated first-type parity values and the instructions (sets of data) in a corresponding manner in the RAM 12. The first-type parity value is, for example, an even parity value or an odd parity value.

The reading control unit 13 performs reading control of the RAM 12. In the case of reading an instruction (set of data) and the corresponding first-type parity value from the RAM 12, the reading control unit 13 calculates a second-type parity value of the instruction (set of data) that has been read. The second-type parity value too is, for example, an even parity value or an odd parity value. The reading control unit 13 compares the calculated second-type parity value with the first-type parity value that is read from the RAM 12, and determines whether or not the first-type parity value is same as the second-type parity value. Based on the determination result about whether or not the first-type parity value is same as the second-type parity value, the reading control unit 13 determines the presence or absence of a parity error in the instruction (set of data). For example, a parity error represents the bit inversion caused by a soft error. If the first-type parity value is same as the second-type parity value, the reading control unit 13 determines that no parity error has occurred in the instruction (set of data) read from the RAM 12. On the other hand, when the first-type parity value is different than the second-type parity value, the reading control unit 13 determines that a parity error has occurred in the instruction (set of data) read from the RAM 12.

When a parity error occurs in an instruction (set of data), the transferring unit 14 transfers, to the CPU 6, an instruction (set of data) that is again read from the external ROM via the second bus 8. On the other hand, when no parity error has occurred in the instruction (set of data), the transferring unit 14 transfers, to the CPU 6, the instruction (set of data) that was read from the RAM 12. The transferring unit 14 includes an output unit 15 and a reloading unit 16. The output unit 15 is a multiplexer that switches between transferring, to the first bus 7, the instruction (set of data) coming from the external ROM 3 and transferred from the reloading unit 16, and transferring, to the first bus 7, the instruction (set of data) coming from the RAM 12 and transferred from the reading control unit 13. When a parity error has occurred in an instruction (set of data); the output unit 15 transfers, to the first bus 7, the instruction (set of data) coming from the external ROM 3 and transferred from the reloading unit 16. On the other hand, when no parity error has occurred in an instruction (set of data); the output unit 15 transfers, to the first bus 7, the instruction (set of data) coming from the RAM 12 and transferred from the reading control unit 13.

When a parity error has occurred in an instruction (set of data), the reloading unit 16 again reads the instruction (set of data) from the external ROM 3 via the second bus 8. Then, while transferring to the output unit 15 the instruction (set of data) that is again read from the external ROM 3 the reloading unit 16, the reloading unit 16 transfers that instruction (set of data) to the writing control unit 11 too.

When no parity error has occurred in an instruction (set of data), the reading control unit 13 transfers the instruction (set of data) to the output unit 15 of the transferring unit 14, and performs switching control of the output unit 15 in order to establish connection between the reading control unit 13 and the first bus 7.

When a parity error has occurred in an instruction (set of data); the reading control unit 13 outputs, to the reloading unit 16, a control signal for the purpose of again reading the instruction (set of data) from the external ROM 3, and performs switching control of the output unit 15 to establish connection between the reloading unit 16 and the first bus 7. Then, the reloading unit 16 transfers, to the output unit 15 and the writing control unit 11, the instruction (set of data) that is again read from the external ROM 3 via the second bus 8.

Then, as explained earlier, when a parity error has occurred in an instruction (set of data), the output unit 15 transfers, to the CPU 6 via the first bus 7, the instruction (set of data) that is again read from the reloading unit 16. At the time of receiving the instruction (set of data) transferred from the output unit 15 via the first bus 7; if the instruction is received, the CPU 6 executes that instruction, and, if the data is received, the CPU 6 uses that data.

Moreover, the writing control unit 11 calculates the first-type parity value of the instruction (set of data) transferred from the reloading unit 16 and, writes that instruction (set of data) and the first-type parity value in the RAM 12.

### Writing operation

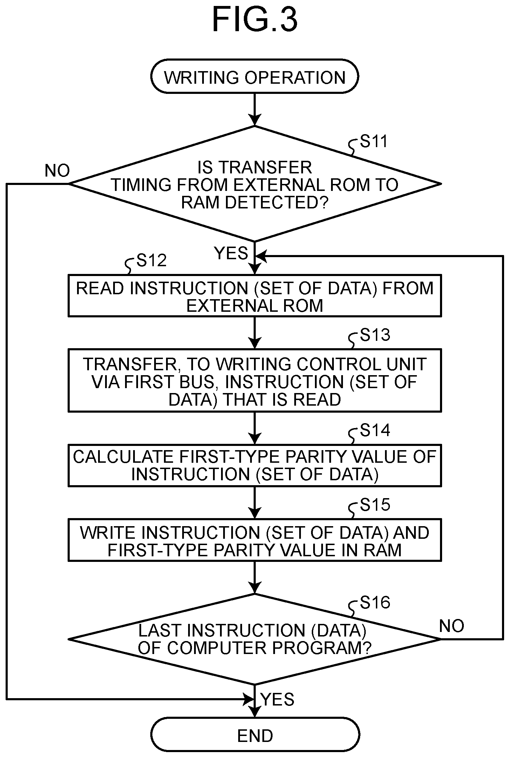

FIG. 3 is a flowchart for explaining an example of the operations performed in a writing operation in the information processing device 1. The information processing device 1 determines whether or not the transfer timing of a transfer from the external ROM 3 to the RAM 12 is detected (Step S11). When the transfer timing from the external ROM 3 to the RAM 12 is detected (Yes at Step S11), the information processing device 1 reads an instruction (set of data) of a computer program from the external ROM 3 (Step S12). The external bus I/F 4 in the information processing device 1 transfers the instruction (set of data), which is read from the external ROM 3, to the writing control unit 11 in the memory control unit 5 via the first bus 7 (Step S13).

The writing control unit 11 calculates the first-type parity value of the instruction (set of data) transferred thereto via the first bus 7 (Step S14). Then, the writing control unit 11 writes the instruction (set of data), which is transferred thereto, and the calculated parity value in the RAM 12 of the memory control unit 5 (Step S15). Moreover, after writing the instruction (set of data), which is transferred thereto, in the RAM 12, the writing control unit 11 determines whether or not the written instruction (set of data) is the last instruction (last set of data) (Step S16). The last instruction implies the instruction that is given at the end of, for example, a plurality of instructions given in the computer program written in the RAM 12. The last set of data implies the set of data placed at the end of, for example, a plurality of sets of data present in the computer program that is written in the RAM 12.

When the written instruction (set of data) is the last instruction (last set of data) of the computer program (Yes at Step S16), the writing control unit 11 determines that no more instructions (sets of data) are left in the computer program and thus ends the operations illustrated in FIG. 3. On the other hand, when the written instruction (set of data) is not the last instruction (not the last set of data) of the computer program (No at Step S16), the writing control unit 11 determines that there are more instructions (sets of data) in the computer program, and the system control returns to Step S12 for reading another instruction (set of data) from the external ROM 3.

Meanwhile, when the transfer timing from the external ROM 3 to the RAM 12 is not detected (Yes at Step S11), the information processing device 1 ends the operations illustrated in FIG. 3.

When the transfer timing from the external ROM 3 to the RAM 12 is detected, the memory control unit 5 of the information processing device 1 calculates the first-type parity value of the instruction (set of data) read from the external ROM 3 via the first bus 7, and writes the calculated first-type parity value and the instruction (set of data) in the RAM 12. As a result, the information processing device 1 prepares for making high-speed access to the computer program at the time of running the computer program.

### Execution operation

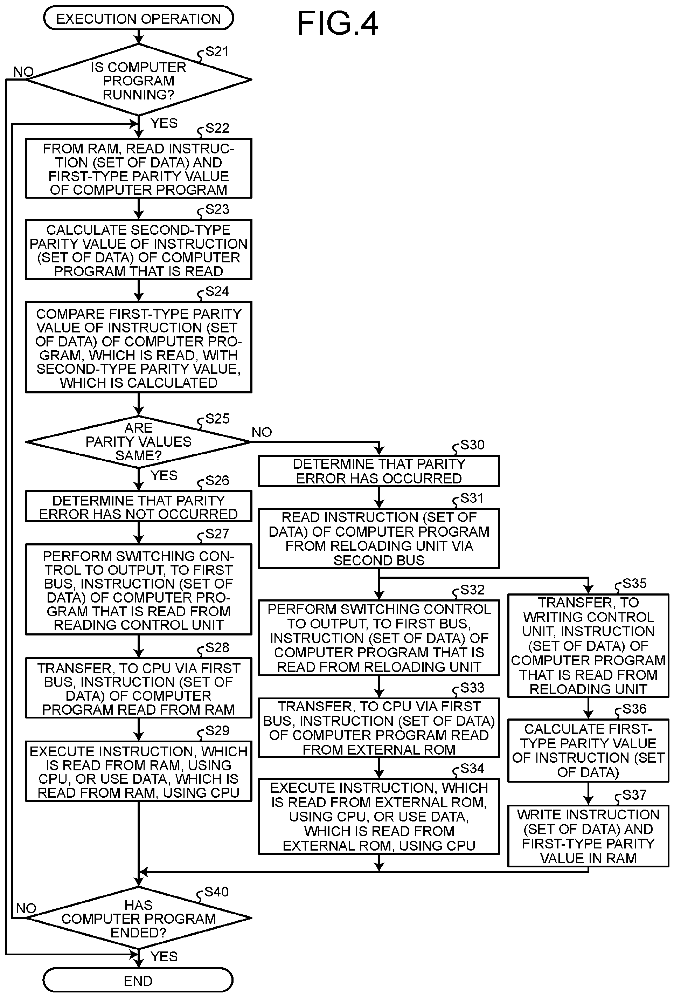

FIG. 4 is a flowchart for explaining an example of the operations performed in an execution operation in the information processing device 1. With reference to FIG. 4, the information processing device 1 determines whether or not the running of a computer program is detected (Step S21). When the running of a computer program is detected (Yes at Step S21), the reading control unit 13 of the information processing device 1 reads an instruction (set of data) and the first-type parity value from the RAM 12 (Step S22).

The reading control unit 13 calculates the second-type parity value of the instruction (set of data) read from the RAM 12 (Step S23). The reading control unit 13 compares the first-type parity value, which is read at Step S22, with the second-type parity value, which is calculated at Step S23 (Step S24). The reading control unit 13 determines whether or not the first-type parity value is same as the second-type parity value (Step S25).

When the first-type parity value is same as the second-type parity value (Yes at Step S25), the reading control unit 13 determines that no parity error has occurred in the read instruction (set of data) (Step S26). Then, in order to switch to transferring, to the first bus 7, the instruction (set of data) that is read from the RAM 12; the reading control unit 13 controls the output unit 15 (Step S27).

The output unit 15 transfers, to the CPU 6 via the first bus 7, the instruction (set of data) read from the reading control unit 13 (Step S28). When the instruction is transferred at Step S28, the CPU 6 executes the instruction read from the RAM 12; or, when the data is transferred at Step S28, the CPU 6 uses the data read from the RAM 12 (Step S29). Then, the CPU 6 determines whether or not the computer program has ended (Step S40). If the computer program has not ended (No at Step S40), the system control returns to the operation at Step S22 so that the CPU 6 can read another instruction (set of data) in the computer program and the corresponding first-type parity value.

Meanwhile, when the program has ended (Yes at Step S40), the CPU 6 ends the operations illustrated in FIG. 4. Thus, by executing all instructions or by using all of the data in the computer program read from the RAM 12, the CPU 6 becomes able to make high-speed access to the computer program.

When the first-type parity value is not same as the second-type parity value (No at Step S25), the reading control unit 13 determines that a parity error has occurred in the instruction (set of data) read from the RAM 12 (Step S30). When it is determined that a parity error has occurred, the reloading unit 16 again reads the instruction (set of data) from the external ROM 3 via the second bus 8 (Step S31).

Meanwhile, when it is determined at Step S30 that a parity error has occurred, the reading control unit 13 controls the output unit 15 in order to switch to transferring, to the first bus 7, the instruction (set of data) that is again read from the reloading unit 16 (Step S32). Moreover, the output unit 15 transfers the instruction (set of data), which is again read from the external ROM 3, to the CPU 6 via the first bus 7 (Step S33). When the instruction that is again read from the reloading unit 16 is transferred at Step S33, the CPU 6 executes the instruction read from the external ROM 3; or, when the data is transferred at Step S33, the CPU 6 uses the data read from the external ROM 3 (Step S34). Then, the system control proceeds to Step S40 for determining whether or not the computer program has ended. As a result, even when an error occurs in an instruction or in a set of data in a computer program stored in the RAM 12, the CPU 6 can use the correct instruction or the correct set of data read from the external ROM 3 and can execute the computer program in a normal manner.

Meanwhile, when it is determined at Step S30 that an error has occurred, while transferring, to the CPU 6 via the first bus 7, the instruction (set of data) that is read again; the reloading unit 16 transfers the instruction (set of data), which is read again, to the writing control unit 11 too (Step S35). Moreover, the writing control unit 11 calculates the first-type parity value of the instruction (set of data) transferred at Step S35 (Step S36) and writes the transferred instruction (set of data) and the calculated first-type parity value in the RAM 12 (Step S37); and the system control proceeds to Step S40 for determining whether or not the computer program has ended. As a result, the information processing device 1 becomes able to prepare for making high-speed access at the time of reading the next instruction (set of data).

Meanwhile, when it is determined that the running of a computer program is not detected (No at Step S21), the reading control unit 13 ends the operations illustrated in FIG. 4.

### Effects of embodiment

When a parity error has occurred in an instruction (set of data) in a computer program that was transferred from the external ROM 3 and that is stored in the RAM 12, the information processing device 1 again reads the normal instruction (set of data) from the external ROM 3. Then, the information processing device 1 causes the CPU 6 to execute the normal instruction (set of data) that is read again. As a result, even when a parity error has occurred in the instruction (set of data) of the RAM 12, it becomes possible to continue with the normal operation of the computer program. Moreover, without installing the ECC and by reducing the scale attributed to the addition of a circuit for detection and correction of soft errors, it becomes possible to hold down the mounting area of the circuit and at the same time to repair the bit inversion caused by the soft errors repaired and to continue with the normal operation of the computer program.

Based on the parity value of an instruction (set of data) read from the RAM 12, the information processing device 1 determines the presence or absence of a parity error in the instruction (set of data); and, if a parity error has occurred, transfers to the CPU 6, the instruction (set of data) that is again read from the external ROM 3. As a result, even when a soft error occurs, it becomes possible to continue with the normal operation of the computer program.

When no parity error has occurred, the information processing device 1 transfers, to the CPU 6, the instruction (set of data) read from the RAM 12. As a result, it becomes possible to make high-speed access to the computer program.

When a parity error occurs, the reloading unit 16 again reads the instruction (set of data) from the external ROM 3 and transfers the instruction (set of data), which is read again, to the output unit 15 and the writing control unit 11. Moreover, when a parity error has occurred, the output unit 15 transfers, to the CPU 6, the instruction (set of data) that is again read by the reloading unit 16; and, when no parity error has occurred, the output unit 15 transfers, to the CPU 6, the instruction (set of data) read from the RAM 12. As a result, even when a soft error occurs, it becomes possible to continue with the normal operation of the computer program.

The information processing device 1 includes the first bus 7 that connects the transferring unit 14 and the CPU 6 to each other, and includes the second bus 8 that connects the external ROM 3 and the transferring unit 14 to each other. When a parity error occurs, the reloading unit 16 again reads the instruction (set of data) from the external ROM 3 via the second bus 8. When a parity error has occurred, the output unit 15 transfers, to the CPU 6 via the first bus 7, the instruction that is again read by the reloading unit 16. However, when no parity error has occurred, the output unit 15 transfers, to the CPU 6 via the first bus 7, the instruction (set of data) that is read from the RAM 12. Hence, even when the CPU 6 is occupying the first bus 7, the instruction (set of data) can be read from the external ROM 3 using the second bus 8.

The output unit 15 transfers, to the CPU 6 via the first bus 7, the instruction (set of data) that is again read by the reloading unit 16. Moreover, the reloading unit 16 transfers the instruction (set of data), which is read again, to the writing control unit 11. Furthermore, the writing control unit 11 calculates the first-type parity value of the computer program that is again read by the reloading unit 16. Moreover, the writing control unit 11 writes the instruction (set of data), which is read again, and the calculated first-type parity value in the RAM 12. As a result, the information processing device 1 becomes able to prepare for making high-speed access at the time of reading the next instruction (set of data).

Herein, the explanation is given for the example in which, when a parity error occurs, the reloading unit 16 again reads the instruction (set of data) from the external ROM 3 via the second bus 8, and transfers that instruction (set of data) to the CPU 6 and the writing control unit 11 via the first bus 7. However, that is not the only possible case. Alternatively, when a parity error occurs, the reloading unit 16 again reads the instruction (set of data) from the external ROM 3 via the second bus 8, and transfers that instruction (set of data) to the writing control unit 11. Then, the writing control unit 11 performs the writing operation for writing the first-type parity value of the instruction (set of data) along with the instruction (set of data) in the RAM 12. Subsequently, the reading control unit 13 performs the operation at Step S22 illustrated in FIG. 4. As a result, even when a soft error occurs, it becomes possible to continue with the normal operation of the computer program.

In the information processing device 1 according to the present embodiment, the explanation is given for the case in which, in addition to using the first bus 7, the second bus 8 is also used that establishes connection with the reloading unit 16 for error correction purposes; so that, even when the CPU 6 is occupying the first bus 7, the instruction (set of data) is read from the external ROM 3 via the second bus 8. However, the configuration is not limited to using two buses. Alternatively, for example, even if the second bus 8 is not provided, the first bus 7 can be connected to the reloading unit 16.

In that case, in the information processing device 1, while the CPU 6 is reading an instruction (set of data) of a computer program using the first bus 7, if an error is detected in the instruction (set of data) based on the parity value, the first bus 7 is released. After the first bus 7 is released, the writing control unit 11 uses the first bus 7 and writes, in the RAM 12, the instruction (set of data) that is again read from the external ROM 3. After the writing of the instruction (set of data) is completed, the reading control unit 13 releases the first bus 7 and reads the instruction (set of data) from the RAM 12. Then, the output unit 15 transfers the read instruction (set of data) to the CPU 6 using the first bus 7. Subsequently, the CPU 6 executes the instruction transferred thereto or uses the data transferred thereto. Thus, in the information processing device 1, even when only the first bus 7 is provided without providing the second bus 8, it becomes possible to continue with the normal operation of the computer program.

Meanwhile, for explanatory purposes, instead of using the IC 2, it is also possible to use, for example, an application specific integrated circuit/field programmable gate array (ASIC/FPGA). Thus, is possible to make changes in an arbitrary manner.

Moreover, the process functions implemented in the device are entirely or partially implemented by a CPU or by computer programs that are analyzed and executed by a CPU, or are implemented as hardware by wired logic.

According to an aspect, it becomes possible to continue with the normal operation of a computer program.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An information processing device (1) having a control unit (2) configured to write a computer program, which is read from an external memory unit (3), in an internal memory unit (12) and execute the computer program which is read from the internal memory unit, the information processing device (1) comprising:
a writing control unit (11) configured to calculate a parity value of an instruction or a set of data of the computer program read from the external memory unit, and write the instruction or the set of data and the parity value in the internal memory unit;
a reading control unit (13) configured to determine, based on the parity value of the instruction or the set of data of the computer program read from the internal memory unit, presence or absence of an error in the instruction or the set of data of the computer program; and
a transferring unit (14) configured to transfer, when the error has occurred, the instruction or the set of data of the computer program, which is read again from the external memory unit, to the control unit (2) and the writing control unit (11).

2. The information processing device (1) according to claim 1, wherein the transferring unit (14) includes
a reloading unit (16) configured to read again, when the error has occurred, the instruction or the set of data of the computer program from the external memory unit, and
an output unit (15) configured to transfer,
when the error has occurred, to the control unit (2), the instruction or the set of data of the computer program that is again read by the reloading unit (16), and
when the error has not occurred, to the control unit (2), the instruction or the set of data of the computer program that is read from the internal memory unit.

3. The information processing device (1) according to claim 2, further comprising:
a first bus (7) that connects the transferring unit (14) and the control unit (2) to each other; and
a second bus (8) that connects the external memory unit (3) and the transferring unit (14) to each other, wherein
when the error has occurred, the reloading unit (16) again reads, from the external memory unit via the second bus, the instruction or the set of data of the computer program and transfers, to the output unit (15) and the writing control unit (11), the instruction or the set of data of the computer program that is read again,
when the error has occurred, the output unit (15) transfers, to the control unit (2) via the first bus (7), the instruction or the set of data of the computer program that is again read by the reloading unit (16), and
when the error has not occurred, the output unit (15) transfers, to the control unit (2) via the first bus (7), the instruction or the set of data of the computer program that is read from the internal memory unit.

4. The information processing device (1) according to claim 2 or 3, wherein the writing control unit (11)
calculates a parity value of the instruction or the set of data of the computer program that is again read by the reloading unit (16), and
writes, in the internal memory unit, the instruction or the set of data of the computer program, which is again read, and the calculated parity value.

5. An information processing method implemented by an information processing device (1) having a control unit (2) that writes a computer program, which is read from an external memory unit (3), in an internal memory unit (12) and executes the computer program which is read from the internal memory unit, the information processing method comprising:
writing that includes calculating a parity value of an instruction or a set of data of the computer program read from the external memory unit, and writing the instruction or the set of data and the parity value in the internal memory unit;
determining, based on the parity value of the instruction or the set of data of the computer program read from the internal memory unit, presence or absence of an error in the instruction or the set of data of the computer program; and
transferring, when the error has occurred, the instruction or the set of data of the computer program, which is read again from the external memory unit, to the control unit (2).
